# EUROPÄISCHE PATENTSCHRIFT

(11) **EP 1 378 734 B1**
(45) Veröffentlichungstag und Bekanntmachung des Hinweises auf die Patenterteilung: **15.12.2004**
(21) Anmeldenummer: 02015135.3
(22) Anmeldetag: 06.07.2002
(51) Int. Cl.: G01J 3/28

(54) **Optisches Spektrometer mit mehreren spektralen Bandbreiten**
Optical spectrometer with multiple spectral bandwidths
Spectromètre optique avec plusieurs largeurs de bande spectrale

(43) Veröffentlichungstag der Anmeldung: 07.01.2004
(73) Patentinhaber: Acterna Germany GmbH, 72800 Eningen (DE)
(72) Erfinder: Fuhrmann, Thomas, 72800 Eningen (DE); Pahlke, Michael, 73614 Schorndorf (DE); Schmid, Wolfgang, 70599 Stuttgart (DE)
(74) Vertreter: Kohler Schmid Möbus

(56) Entgegenhaltungen:
- US-A- 3 748 040
- US-A- 5 157 456
- US-A- 5 767 966
- PATENT ABSTRACTS OF JAPAN vol. 015, no. 037 (P-1159), 29. Januar 1991 (1991-01-29) & JP 02 275326 A (KURARAY CO LTD), 9. November 1990 (1990-11-09)
- United States Patent Application 2002/0080353 A1 (FUHRMANN, T. ET AL) 27 June 2002: 'Spectral bandwitch calibration of an optical spectrum analyzer'

## Beschreibung

Die Erfindung betrifft ein optisches Spektrometer und insbesondere einen optischen Spektrumanalysator.

Aus der EP 1 106 979 A1 ist ein optischer Spektrumanalysator mit vier parallelen optischen Messpfaden bekannt. Jeder Messpfad weist eine Einkoppel-Lichtleitfaser mit einem die Eingangsapertur definierenden Faserende, ein gemeinsames Beugungsgitter und eine Auskoppel-Lichtleitfaser mit einem die Eingangsapertur definierenden Faserende auf. Als Lichtleitfasern werden SingleMode-Standardfasern für den Wellenlängenbereich von 1550 nm verwendet, deren Kemdurchmesser 9 µm beträgt. Durch das Beugungsgitter werden die auftreffenden Lichtstrahlen wellenlängenabhängig entlang einer Dispersionsachse dispergiert, so dass je nach Drehstellung des Beugungsgitters unterschiedliche Spektralanteile über die Auskoppelapertur in die Auskoppel-Lichtleitfaser eingekoppelt werden. Allerdings ist es nicht möglich, den bekannten optischen Spektrumanalysator in unterschiedlichen Messmodi mit unterschiedlichen Bandbreiten bei gleicher Wellenlänge zu betreiben.

Aus US 2002/0080353 A1 ist weiterhin ein optischer Spektrumanalysator mit zwei voneinander getrennten Pfaden für ein Referenz- und ein Messspektrum bekannt. Das Referenzspektrum wird auf einem Referenzpfad zu einem Empfänger und ein Messspektrum auf einem Messpfad zu einem anderen Empfänger geführt. Diese Anordnung ermöglicht die gleichzeitige Messung von Referenz- und Messspektrum durch den optischen Spektrumanalysator.

Es sind zwar optische Spektrumanalysatoren bekannt, z.B. der OSA-200 DROP der Firma Acterna Eningen GmbH, die zusätzlich zur Funktion der Spektralanalyse noch die Funktion des Kanalfilters (d.h. einen in der Wellenlänge einstellbaren Bandpass) besitzen. Allerdings ist für die Messung des optischen Spektrums eine gewisse optische Bandbreite (ca. 70 pm) optimal, während für die Funktion des Kanalfilters eine optische Bandbreite optimal ist, die von der Modulationsfrequenz des zu filternden Signals abhängig ist (z.B. ca. 200 pm für ein 10 GBit/s-Signal). Aus diesem Grund war es bisher nicht möglich, beide Funktionen in einem Gerät zu vereinen. Daher war entweder der Kanalfilter nur eingeschränkt, nämlich bei niedrigen Modulationsfrequenzen, zu benutzen, oder es waren zwei getrennte Geräte erforderlich, was mit zusätzlichem Aufwand und Kosten verbunden war.

Demgegenüber besteht die Aufgabe der vorliegenden Erfindung darin, ein optisches Spektrometer mit mehreren spektralen Bandbreiten bereitzustellen.

Diese Aufgabe wird erfindungsgemäß gelöst durch ein optisches Spektrometer, insbesondere Spektrumanalysator, umfassend mindestens zwei Einkoppelaperturen, eine Einrichtung zum Dispergieren der aus den Einkoppelaperturen jeweils austretenden Lichtstrahlen entlang einer Dispersionsachse und mindestens zwei Auskoppelaperturen, auf die die dispergierten Lichtstrahlen jeweils abgebildet werden, wobei die Ein- und Auskoppelaperturen durch die Faserenden von Lichtleitfasem gebildet sind, wobei die Modenfelddurchmesser der Faserenden der Einkoppelaperturen unterschiedlich sind und wobei die Modenfelddurchmesser der Faserenden der Auskoppelaperturen jeweils den Modenfelddurchmessern der zugehörigen Faserenden der Einkoppelaperturen entsprechen.

Aufgrund des vergrößerten Modenfelddurchmessers kann ein größerer spektraler Anteil an dispergierten Lichtstrahlen, d.h. eine größere spektrale Bandbreite, in die Auskoppelapertur eingekoppelt werden. Um dabei die beim Ein- und Auskoppeln der Lichtstrahlen aus bzw. in die Ein- und Auskoppelaperturen auftretende Dämpfung zu minimieren, muss die Einkoppelapertur den gleichen Modenfelddurchmesser wie die Auskoppelapertur aufweisen. Das erfindungsgemäße optische Spektrometer ermöglicht einen zusätzlichen Messkanal (z.B. Filterausgang) mit vergrößerter Bandbreite, d.h. mehrere Messkanäle mit unterschiedlicher Bandbreite, sowie den gleichzeitigen Betrieb mit mehreren verschiedenen spektralen Bandbreiten.

Erfindungsgemäß sind somit in einem einzigen Gerät die optimale Bandbreite für die optische Spektralanalyse und die optimale Bandbreite für die Kanalfilterung eines 10 GBit/s-Signals vorhanden, so dass auf ein externes Kanalfilter verzichtet werden kann, ohne technisch Kompromisse machen zu müssen. Zur Erzeugung des größeren Modenfelddurchmessers können die Faserenden verschiedenartig modifiziert sein. Beispielsweise können die Faserenden sphärisch oder asphärisch ausgebildet oder mit optischen Elementen bestückt sein, welche die Funktion einer Linse besitzen.

Bei besonders bevorzugten Ausführungsformen der Erfindung sind die Ein- und/oder die Auskoppelaperturen mit dem kleineren Modenfelddurchmesser durch das Faserende von SingleMode-Standardfasern (Kerndurchmesser 9 µm) und die Einund/oder die Auskoppelaperturen mit dem größeren Modenfelddurchmesser durch Lichtleitfasern mit einem gegenüber SingleMode-Standardfasern im Kerndurchmesser verbreiterten Faserende gebildet. Als Fasern mit solch einem verbreiterten Kernende können insbesondere so genannte TEC (Thermally Expanded Core)-Fasern mit einem am Faserende auf ca. 20 µm bis ca. 40 µm verbreiterten Kerndurchmesser verwendet werden.

Die mindestens zwei optischen Messpfade des erfindungsgemäßen Spektrometers können beide einen eigenen optischen Eingang oder einen gemeinsamen optischen Eingang haben, welcher dann mittels eines optischen Schalters jeweils mit einem der Messpfade verbunden wird.

Bevorzugt ist zumindest der Ausgangsapertur mit dem größeren Modenfelddurchmesser ein optischer Ausgang zugeordnet, so dass zumindest das Ausgangssignal mit der größeren spektralen Bandbreite für weitere Anwendungen zur Verfügung steht. Dagegen ist der Auskoppelapertur mit dem kleineren Modenfelddurchmesser vorzugsweise ein Detektor zugeordnet, um den mit der kleineren spektralen Bandbreite in die Auskoppelapertur eingekoppelten Spektralanteil zu analysieren.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erstes Ausführungsbeispiel des erfindungsgemäßen optischen Spektrometers mit zwei separaten Messpfaden; und
- Fig. 2: ein zweites Ausführungsbeispiel des erfindungsgemäßen optischen Spektrometeres mit einem optischen Schalter zum Auswählen eines der zwei optischen Messpfade.

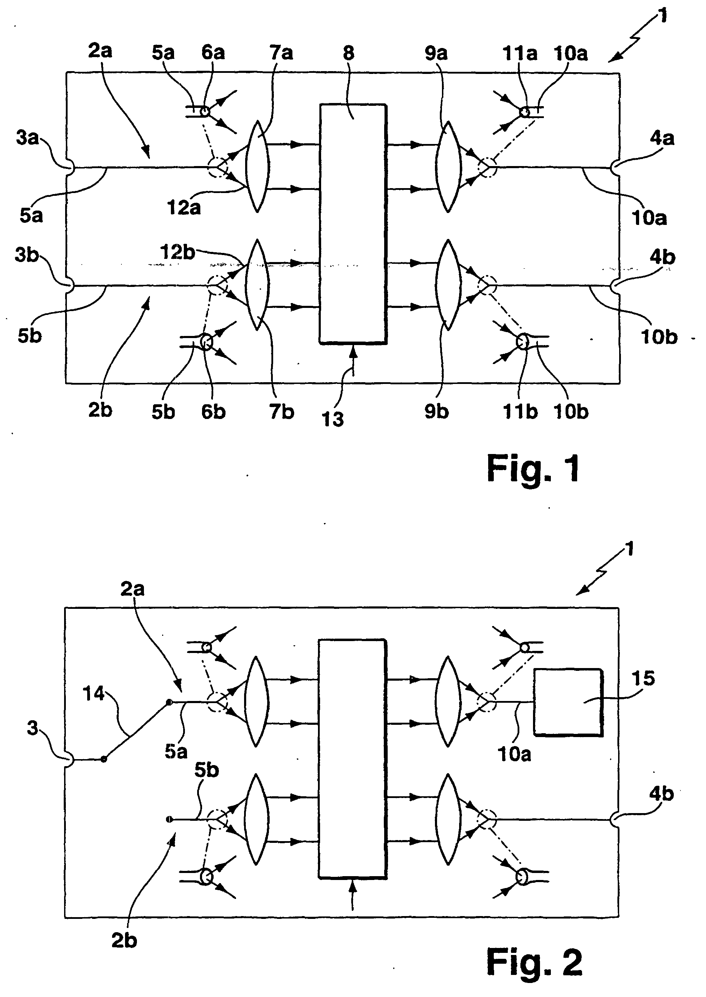

Das in **Fig. 1** gezeigte optische Spektrometer **1** umfasst zwei parallele optische Messpfade **2a, 2b** mit je einem optischen Eingang **3a, 3b** und einem optischen Ausgang **4a, 4b**. Die Messpfade **2a, 2b** weisen jeweils eingangsseitig eine Einkoppelfaser **5a, 5b** mit einer Einkoppelapertur **6a, 6b**, eine Linse **7a, 7b,** eine gemeinsame verdrehbare Dispersionseinrichtung (z.B. Beugungsgitter) **8**, eine Linse **9a, 9b** sowie ausgangsseitig eine Auskoppelfaser **10a, 10b** mit einer Auskoppelapertur **11a, 11b** auf.

Die Ein- und Auskoppelfasern 5a, 10a des in Fig. 1 oberen optischen Messpfades 2a sind SingleMode-Standardfasern, deren Faserenden die Ein- bzw. Auskoppelaperturen 6a bzw. 11a bilden. Daher sind die Ein- bzw. Auskoppelaperturen 6a bzw. 11a durch den Kern- bzw. den Modenfelddurchmesser der SingleMode-Standardfasern von 9 µm definiert. Die Ein- und Auskoppelfasern 5b, 10b des unteren Messpfades 2b sind SingleMode-Standardfasern, deren Faserenden die Ein- bzw. Auskoppelaperturen 6b,11b bilden und die am Faserende gegenüber SingleMode-Standardfasern im Kem- bzw. Modenfelddurchmesser auf z.B. ca. 20 bis ca. 40 µm verbreitert sind.

Die aus den Einkoppelaperturen 6a, 6b austretenden Lichtstrahlen **12a, 12b** werden jeweils von den Linsen 7a, 7b als Parallelstrahlen auf die Dispersionseinrichtung 8 geführt. Die auf die Dispersionseinrichtung 8 auftreffenden Lichtstrahlen werden wellenlängenabhängig entlang einer Dispersionsachse dispergiert, so dass je nach Drehstellung der Dispersionseinrichtung 8 unterschiedliche Spektralanteile von den Linsen 9a, 9b auf die jeweilige Auskoppelapertur 11a, 11b fokussiert und so in die Auskoppelfasern 10a, 10b eingespeist werden. Aufgrund des vergrößerten Modenfelddurchmessers kann in die Auskoppelapertur 11b ein größerer spektraler Anteil an dispergierten Lichtstrahlen, d.h. Licht mit einer größeren spektralen Bandbreite, eingekoppelt werden als in die Auskoppelapertur 11a, so dass die Ausgänge 4a, 4b bei gleichen optischen Eingangssignalen optische Ausgangssignale mit unterschiedlichen spektralen Bandbreiten liefern. Der Stellmechanismus zum Verdrehen der Dispersionseinrichtung 8 ist durch den Pfeil **13** angedeutet.

Von dem optischen Spektrometer der Fig. 1 unterscheidet sich das in **Fig. 2** gezeigte **o**ptische Spektrometer 1 durch einen für beide Messpfade **2a, 2b** gemeinsamen optischen Eingang **3**, der mittels eines optischen Schalters **14** mit einer der beiden Einkoppelfasern 5a, 5b verbunden wird, sowie dadurch, dass die Auskoppelfaser 10a an einen Detektor (z.B. Schirm) **15** angeschlossen ist. Dieses optische Spektrometer 1 kann wahlweise dazu verwendet werden, die Spektrallinien eines optischen Eingangsspektrums im Detektor 15 mit hoher Auflösung (d.h. mit geringerer spektraler Bandbreite) zu analysieren oder eine Spektrallinie des optischen Eingangsspektrums mit höherer spektraler Bandbreite am Ausgang 4b auszukoppeln.

## Patentansprüche

1. Optisches Spektrometer (1), insbesondere Spektrumanalysator, umfassend mindestens zwei Einkoppelaperturen (6a, 6b), eine Einrichtung (8) zum Dispergieren der aus den Einkoppelaperturen (6a, 6b) jeweils austretenden Lichtstrahlen (12a, 12b) entlang einer Dispersionsachse und mindestens zwei Auskoppelaperturen (11a, 11b), auf die die dispergierten Lichtstrahlen jeweils abgebildet werden, **dadurch gekennzeichnet, dass** die Ein- und Auskoppelaperturen (6a, 6b, 11 a, 11 b) durch die Faserenden von Lichtleitfasern gebildet sind, wobei die Modenfelddurchmesser der Faserenden der Einkoppelaperturen (6a, 6b) unterschiedlich sind und wobei die Modenfelddurchmesser der Faserenden der Auskoppelaperturen (11a, 11b) jeweils den Modenfelddurchmessern der zugehörigen Faserenden der Einkoppelaperturen (6a, 6b) entsprechen.

2. Optisches Spektrometer nach Anspruch 1, **dadurch gekennzeichnet, dass** die Ein- und die Auskoppelaperturen (6a, 11a) mit dem kleineren Modenfelddurchmesser jeweils durch das Faserende einer SingleMode-Standardfaser (5a, 10a) gebildet sind.

3. Optisches Spektrometer nach einem der vorhergehenden Ansprüche, **dadurch gekennzeichnet, dass** die Ein- und/oder die Auskoppelaperturen (6b, 11b) mit dem größeren Modenfelddurchmesser jeweils durch das Faserende einer gegenüber einer SingleMode-Standardfaser (5a, 10a) am Faserende im Kerndurchmesser verbreiterten Lichtleitfaser, insbesondere durch das Faserende einer TEC-Faser (5b, 10b), gebildet sind.

4. Optisches Spektrometer nach einem vorhergehenden Ansprüche, **dadurch gekennzeichnet, dass** die Ein- und/oder die Auskoppelaperturen (6b, 11b) mit dem größeren Modenfelddurchmesser jeweils durch ein sphärisch oder asphärisch ausgebildetes Faserende einer Lichtleitfaser gebildet sind.

5. Optisches Spektrometer nach einem der vorhergehenden Ansprüche, **dadurch gekennzeichnet, dass** die Ein- und/oder die Auskoppelaperturen (6b, 11 b) mit dem größeren Modenfelddurchmesser jeweils durch ein mit einem Linsenelement bestücktes Faserende einer Lichtleitfaser gebildet sind.

6. Optisches Spektrometer nach einem der vorhergehenden Ansprüche, **gekennzeichnet durch** einen einzigen optischen Eingang (3), der mittels eines optischen Schalters (14) mit jeweils einer der Einkoppelaperturen (6a, 6b) verbindbar ist.

7. Optisches Spektrometer nach einem der Ansprüche 1 bis 5, **dadurch gekennzeichnet, dass** jeder Einkoppelapertur (6a, 6b) ein eigener optischer Eingang (3a, 3b) zugeordnet ist.

8. Optisches Spektrometer nach einem der vorhergehenden Ansprüche, **dadurch gekennzeichnet, dass** zumindest der Auskoppelapertur (11b) mit dem größeren Modenfelddurchmesser ein optischer Ausgang (4b) zugeordnet ist.

9. Optisches Spektrometer nach einem der vorhergehenden Ansprüche, **dadurch gekennzeichnet, dass** der Auskoppelapertur (11a) mit dem kleineren Modenfelddurchmesser ein Detektor (15) zugeordnet ist.

## Claims

1. Optical spectrometer (1), in particular spectrum analyzer, comprising at least two coupling apertures (6a, 6b), a means (8) for dispersing the light beams (12a, 12b) each exiting the coupling apertures (6a, 6b) along a dispersion axis and at least two decoupling apertures (11a, 11b) on which the dispersed light beams are each imaged, **characterized in that** the coupling and decoupling apertures (6a, 6b, 11a, 11b) are formed by the fiber ends of optical fibers, wherein the mode field diameters of the fiber ends of the coupling apertures (6a, 6b) are different and wherein the mode field diameters of the fiber ends of the decoupling apertures (11a, 11b) each correspond to the mode field diameters of the associated fiber ends of the coupling apertures (6a, 6b).

2. Optical spectrometer according to claim 1, **characterized in that** the coupling and decoupling apertures (6a, 11a) with the smaller mode field diameter are each formed by the fiber end of a SingleMode standard fiber (5a, 10a).

3. Optical spectrometer according to any one of the preceding claims, **characterized in that** the coupling and/or decoupling apertures (6b, 11b) with the larger mode field diameter are formed each by the fiber end of an optical fiber having a widened core diameter at the fiber end compared to a SingleMode standard fiber (5a, 10a), in particular by the fiber end of a TEC fiber (5b, 10b).

4. Optical spectrometer according to any one of the preceding claims, **characterized in that** the coupling and/or decoupling apertures (6b, 11b) with the larger mode field diameter are each formed by a spherical or aspherical fiber end of an optical fiber.

5. Optical spectrometer according to any one of the preceding claims, **characterized in that** the coupling and/or decoupling apertures (6b, 11b) with the larger mode field diameter are each formed by an optical fiber end provided with a lens element.

6. Optical spectrometer according to any one of the preceding claims, **characterized by** one single optical input (3) which can be connected to each one of the coupling apertures (6a, 6b) via an optical switch (14).

7. Optical spectrometer according to any one of the claims 1 through 5, **characterized in that** each coupling aperture (6a, 6b) is associated with its own optical input (3a, 3b).

8. Optical spectrometer according to any one of the preceding claims, **characterized in that** at least: the decoupling aperture (11b) with the larger mode field diameter is associated with an optical output (4b).

9. Optical spectrometer according to any one of the preceding claims, **characterized in that** the decoupling aperture (11a) with the smaller mode field diameter is associated with a detector (15).

## Revendications

1. Spectromètre optique (1), en particulier analyseur de spectre, comprenant au moins deux ouvertures de couplage (6a, 6b), un dispositif (8) de dispersion des rayons lumineux (12a, 12b) émergeant respectivement des ouvertures de couplage (6a, 6b) le long d'un axe de dispersion et au moins deux ouvertures de découplage (11A, 11b), sur lesquelles sont formés respectivement les rayons lumineux dispersés, **caractérisé en ce que** les ouvertures de couplage et de découplage (6a, 6b, 11a, 11b) sont formées par les extrémités de fibres optiques, les diamètres de champ de mode des extrémités de fibre des ouvertures de couplage (6a, 6b) étant différents et les diamètres de champ de mode des extrémités de fibre des ouvertures de découplage (11a, 11b) correspondant respectivement aux diamètres de champ de mode des extrémités de fibre associées des ouvertures de couplage (6a, 6b).

2. Spectromètre optique selon la revendication 1, **caractérisé en ce que** les ouvertures de couplage et de découplage ((6a, 11a) de plus faible diamètre de champ de mode sont formées respectivement par l'extrémité de fibre une fibre normalisée monomode (5a, 10a).

3. Spectromètre optique selon l'une des revendications précédentes, **caractérisé en ce que** les ouvertures de couplage et/ou les ouvertures de découplage (6b, 11b) de plus grand diamètre de champ de mode sont formées respectivement par l'extrémité d'une fibre optique à diamètre d'âme élargi par rapport à une fibre normalisée monomode (5a, 10a) à l'extrémité de la fibre, en particulier par l'extrémité d'une fibre TEC (5b, 10b).

4. Spectromètre optique selon l'une des revendications précédentes, caractérisé que les ouvertures de couplage et/ou de découplage (6b, 11b) à plus grand diamètre de champ de mode sont formées respectivement sont formées respectivement par une extrémité de fibre sphérique ou asphérique d'une fibre optique.

5. Spectromètre optique selon l'une des revendications précédentes, **caractérisé en ce que** les ouvertures de couplage et/ou les ouvertures de découplage (6b, 11b) de plus grand diamètre de champ de mode sont formées respectivement par une extrémité de fibre munie d'une lentille d'une fibre optique.

6. Spectromètre optique selon une des revendications précédentes, **caractérisé par** une unique entrée optique (3), qui peut être reliée à l'aide d'un commutateur optique (14) à l'une des ouvertures de couplage (6a, 6b) respectivement.

7. Spectromètre optique selon une des revendications 1 à 5, **caractérisé en ce qu'**à chaque ouverture de couplage (6a, 6b) est associée une ouverture optique propre (3a, 3b).

8. Spectromètre optique selon une des revendications précédentes, **caractérisé en ce qu'**à au moins l'ouverture de découplage (11b) de plus grand diamètre de champ de mode est associée une sortie optique (4b).

9. Spectromètre optique selon une des revendications précédentes, **caractérisé en ce qu'**à l'ouverture de découplage (11a) de plus faible diamètre de champ de mode est associé un détecteur (15).
